Europäisches Patentamt

European Patent Office

Office européen des brevets

(11) Publication number: **0 512 568 A1**

## EUROPEAN PATENT APPLICATION

(21) Application number: **92107845.7**

(22) Date of filing: **08.05.92**

(51) Int. Cl.⁵: **F02C 6/08**, F02C 7/143

(30) Priority: **10.05.91 US 698125**

(43) Date of publication of application:
**11.11.92 Bulletin 92/46**

(84) Designated Contracting States:
**BE CH DE ES FR GB IT LI NL PT SE**

(71) Applicant: **UNION CARBIDE INDUSTRIAL GASES TECHNOLOGY CORPORATION**
**39 Old Ridgebury Road**
**Danbury, Ct. 06817-0001(US)**

(72) Inventor: **Wulf, James Bragdon**
**Senior Engineering Associate, 76 Chapel Woods West**
**Williamsville, New York 14221(US)**

(74) Representative: **Schwan, Gerhard, Dipl.-Ing.**
**Elfenstrasse 32**
**W-8000 München 83(DE)**

(54) **System and method for integration of combustor-turbine units and compressors.**

(57) A method and system for supplying compressed air to a process plant. The invention uses a combustor-turbine unit (10) directly coupled to a bull gear (40) meshing with pinions (44,56) which drive the stages of an intercooled multistage compressor (46,50,58,64) to supply compressed air (70,32) to both a plant for processing and the combustor-turbine unit (10) for combustion.

Fig. 1

EP 0 512 568 A1

Rank Xerox (UK) Business Services

## Technical Field

This invention pertains to a system and a method for integrating combustor-turbine units and multistaged intercooled compressors for supplying compressed air to both a process plant and to the combustor-turbine units.

## Background

A process plant compressor is typically driven by a motor receiving electricity from a central supply system, or by a motor receiving electricity from a generator driven by a gas turbine or other engine, or directly by a gas turbine engine. Cost of equipment and operation, being of prime importance, provides incentive to avoid use of a motor and to drive the compressor with a gas turbine engine. However, the operating speed of the gas turbine engine may not match the operating speed of the compressor. To match speeds, a gear system is required adding some cost and power loss.

Process plant compressors are typically radial compressors having a large diameter bull gear with meshing pinions upon the ends of which compression impellers are mounted. The multiple impellers within their own respective housings provide several stages of compression as desired. The bull gear and its meshing pinions are contained within a common housing. Consequently such compressors are known as integral gear compressors. The pinions may have differing diameters to best match the speed requirements of the compression impellers that they drive. The compressed air between any two stages is ducted to an intercooler, wherein it is cooled, thereby providing a more efficient compression process. Such compressors are not expensive, but are heavy, require much space and a supply of coolant for the intercoolers. All of these conditions are readily acceptable in a process plant such as a cryogenic air separation plant which requires a large continuous flow of compressed air supplied at minimum cost.

Advantageously, an integral gear compressor may be driven by a gas turbine engine with its output shaft coupled to a pinion meshing with the bull gear in the compressor. Thus the cost and power loss of an additional gear system is avoided. However still additional improvement is possible by the use of this invention.

Typically a stationary gas turbine engine has been derived from an aircraft gas turbine engine which requires low weight, compactness and small frontal area. Thus typically gas turbine engines have axial compression stages without intercooling in order to achieve these requirements. The mechanical difficulty of extracting compressed air between closely spaced axial stages, cooling it, and reinjecting the cooled air precludes intercooling in axial compressors. The compressor stages in a gas turbine engine are housed within the casing which houses the other components.

Since axial compressors in gas turbine engines are small and do not employ intercooling, their efficiency is lower than that of process plant compressors employing intercooling. For example, intercooling in a compressor with four compression stages providing an overall compression ratio of 7.9, reduces the power required for compression by 20% over that required without intercooling. In a gas turbine engine however, the turbine typically must produce two units of power to drive its compressor for each unit of power delivered through its power output shaft. Thus in a gas turbine engine, 20% increase in compression efficiency results in a 40% increase in power output without any change in the fueling cost. Hence a large improvement in efficiency can be secured by supplying the compressed air required by the gas turbine engine combustor from a process compressor employing intercooling.

The gas turbine without its integral compressor is basically a combustor and turbine and can be termed a combustor-turbine unit. Existing models of gas turbine engines can be manufactured as combustor-turbine units merely by leaving out the compressor blades, thus saving on fabrication cost.

It is an object of this invention to provide a system and a method for more efficient compression of air for supply to a process plant, such as a cryogenic air separation plant.

It is a feature of this invention that a combustor-turbine unit is directly coupled to drive the bull gear of an integral gear, intercooled, multistage compressor for supplying compressed air to a process plant and the combustor-turbine unit itself.

## SUMMARY OF THE INVENTION

This invention provides an improved method and system for supplying compressed air to a process plant. The invention uses a combustor-turbine unit directly coupled to a bull gear meshing with pinions which drive the stages of an intercooled multistage compressor to supply compressed air to both a plant for processing and the combustor-turbine unit itself for combustion. Optionally, with some increase in initial cost and equipment complexity, still further efficiency and fuel economy improvement are obtained by regeneration and reheating, that is preheating the compressed air just prior to entering the combustor by exchanging the compressed air against the exhaust gas emerging from the turbine, and reheating the turbine gas after a first stage of expansion by burning additional fuel in the turbine gas prior to expanding it in a second stage of expansion.

## DESCRIPTION OF THE FIGURES

Fig. 1 is a schematic plan view of a system embodying this invention.

Fig. 2 is a vertical section of Fig. 1 along the line 2-2 in Fig. 2.

Fig. 3 is a temperature-entropy diagram of the process employed by the system of Fig. 1.

Fig. 4 is a schematic of another embodiment of the invention.

Fig. 5 is a schematic of yet another embodiment of the invention.

Fig. 6 is a schematic of an embodiment of the invention suitable for installation with an existing compressor driven by a motor-generator set in a process plant.

Fig 7 is a schematic of an embodiment of the invention in which either an electric drive or a combustor-turbine unit drive may be employed. Such an embodiment is suitable for a low-risk initial installation.

Fig. 8 is a schematic of an embodiment of the invention suitable for integrating multiple combustor-turbine units respectively driving air compressors, recycle compressors, product compressors, and generator-motor sets.

## DESCRIPTION OF THE PREFERRED EMBODIMENTS

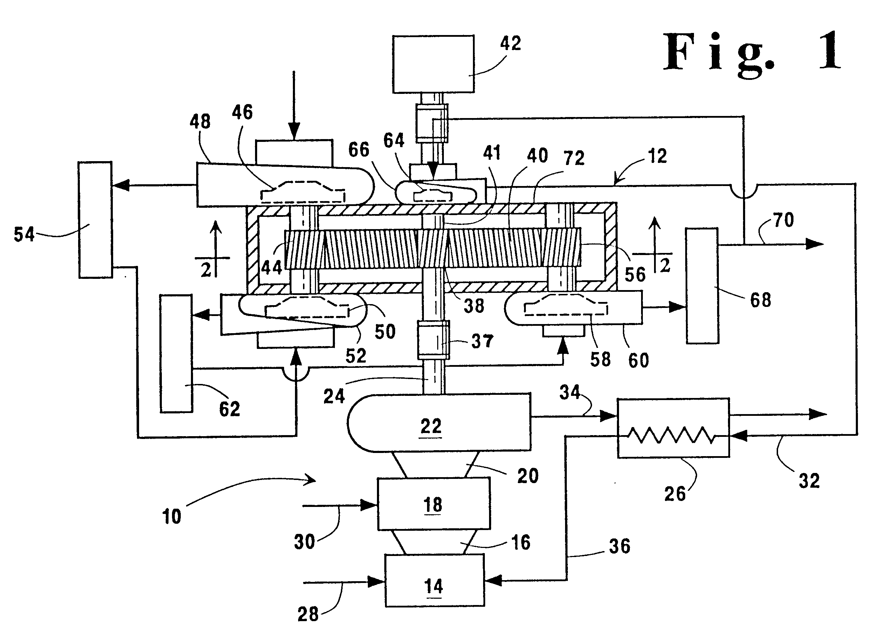

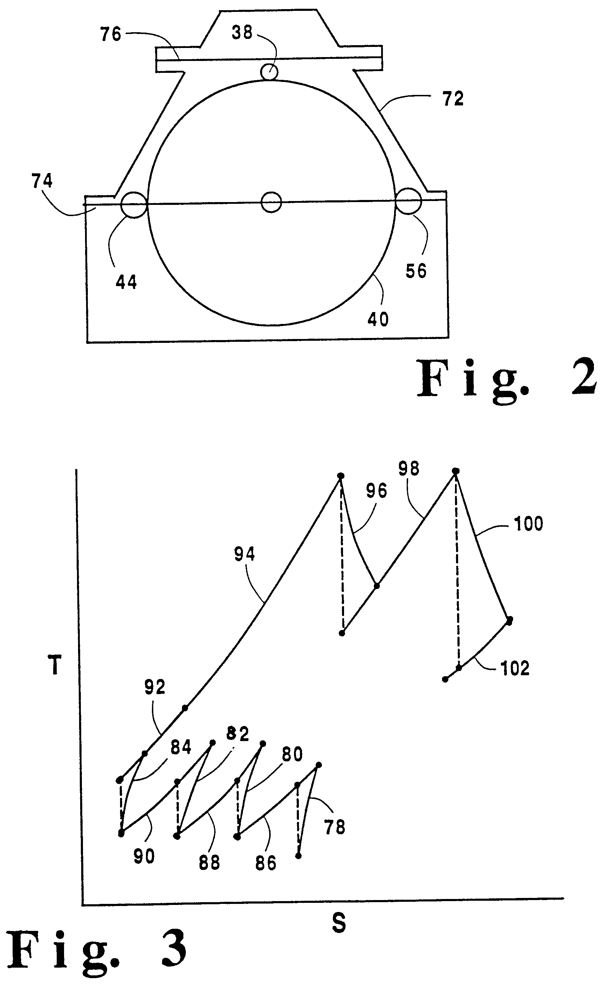

A system embodiment pursuant to this invention, as shown in Fig. 1 and Fig.2, comprises a combustor-turbine unit 10 integrated with an integral gear gas compressor 12. The combustor-turbine unit includes a combustor 14, a first stage turbine 16, a reheater 18, a second stage turbine 20, an exhaust gas collector 22, an output shaft 24 and a regenerative heat exchanger 26. Entering the combustor 14 is a flow 28 of fuel, which may be either liquid or gaseous. Entering the reheater 18 is a second flow 30 of fuel. A compressed air stream 32 from the integral gear compressor enters the regenerative heat exchanger 26 where it is preheated by exchange against the exhaust gas flow 34 from the collector. The preheated compressed air flow 36 then enters the combustor 14.

The combustor-turbine output shaft 24 is connected by a coupling 37 to the end of a first pinion 38 meshing with the integral bull gear 40 of the compressor 12. Conventionally, bull gear means the main gear, usually the largest and strongest, in a gear train, and a pinion means a smaller gear than the bull gear. The pinion 38 is sized to drive the bull gear 40 at an appropriate speed. The bull gear shaft 41 is coupled to an electrical motor 42 for starting the combustor-turbine unit 10. During normal operation of the combustor-turbine unit 10 and the compressor 12, the motor 42 can be operated as a generator to supply power to other parts of the process plant.

Also meshing with the bull gear 40 is a second pinion 44 on which are mounted a first radial impeller 46 enclosed by a housing 48, and a second radial impeller 50 enclosed by a housing 52. Each impeller within its housing provides a stage of compression. Compressed air from the first stage passes through an intercooler 54 en route to the second stage. Also meshing with the bull gear 40 is a third pinion 56 on which is mounted a third radial impeller 58 which, with its housing 60, provides a third stage of compression.

Compressed air from the second stage passes through a second intercooler 62 en route to the third stage. Also mounted on the first pinion 38 is a fourth radial impeller 64 which, with its housing 66, provides a fourth stage of compression. Compressed air from the third stage passes through a third intercooler 68 en route to the fourth stage. From this fourth stage, the compressed air stream 32 flows to the regenerative heat exchanger 26 for preheating.

A compressed air stream 70 is taken from the third compression stage and directed to the process plant according to Fig. 1. However, process plant air and combustor air may be taken from any combination of stages as may be desirable.

Two pinions meshing with a bull gear are most easily accommodated by locating them at the usual split line of the gearcase which is at the horizontal centerline 74 of the gearcase 72. A third pinion can be accommodated by an additional horizontal split line 76 in the gearcase just above the top of the bull gear 40.

To start a combustor-turbine unit and its associated compressor, the system must be rotated by another medium at some speed, typically 20% of the normal operating speed of the combustor-turbine unit. As shown in Fig. 1, an electric motor 42 is coupled to bull gear shaft 41 for starting the combustor-turbine unit 10. During steady-state operation, the motor 42 can be used as a generator of electric power. Alternatively the starter could be coupled through some gearing to a pinion meshing with the bull gear (arrangement not shown).

The integration of the combustor-turbine unit with the integral gear compressor allows all the necessary changes of speed to occur within the gear case of the compressor, which is both economical in equipment and efficient in operation. The supply of compressed air from the intercooled integral gear compressor to the combustor-turbine unit for combustion provides a large increase in efficiency of operation.

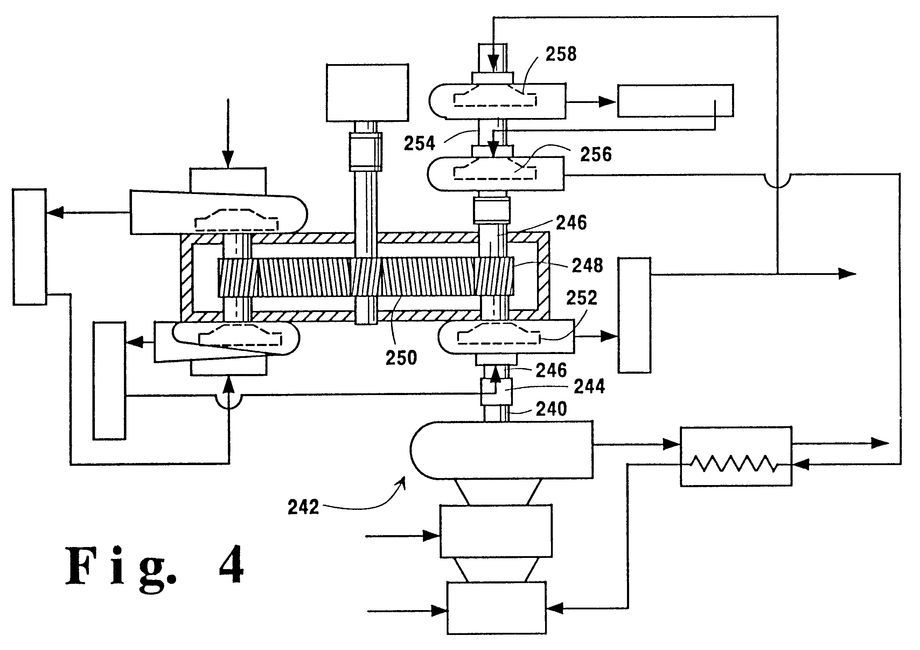

Fig. 3 depicts the processes employed by the system of Fig. 1 on a temperature-entropy diagram. Shown are compression processes for stage one 78, stage two 80, stage three 82 and stage four 84. The subsequent intercooling processes are shown also for stage one 86, stage two 88 and stage three 90. Following are a regenerative heating stage 92, a combustion stage 94, a first expansion stage 96, a reheat stage 98, a second expansion stage 100, and a regeneration stage 102. Ideal isentropic processes (appearing as vertical lines) are shown which correspond to the real, nonideal compression and expansion processes.

In another system embodiment shown in Fig. 4, the output shaft 240 of a combustor-turbine unit 242 is connected by a coupling 244 to a shaft 246 carrying as one of its sides a pinion 248 meshing with and driving the bull gear 250. This shaft 246 also carries an impeller 252, which with its housing, comprises a stage of compression. The other side of the pinion shaft 246 is coupled to a shaft 254 carrying two impellers 256, 258 comprising two additional stages of compression. This embodiment thus illustrates an in-line arrangement of compression stages. Other components of the embodiment in Fig. 4 are identical with components in the embodiment shown in Fig. 1.

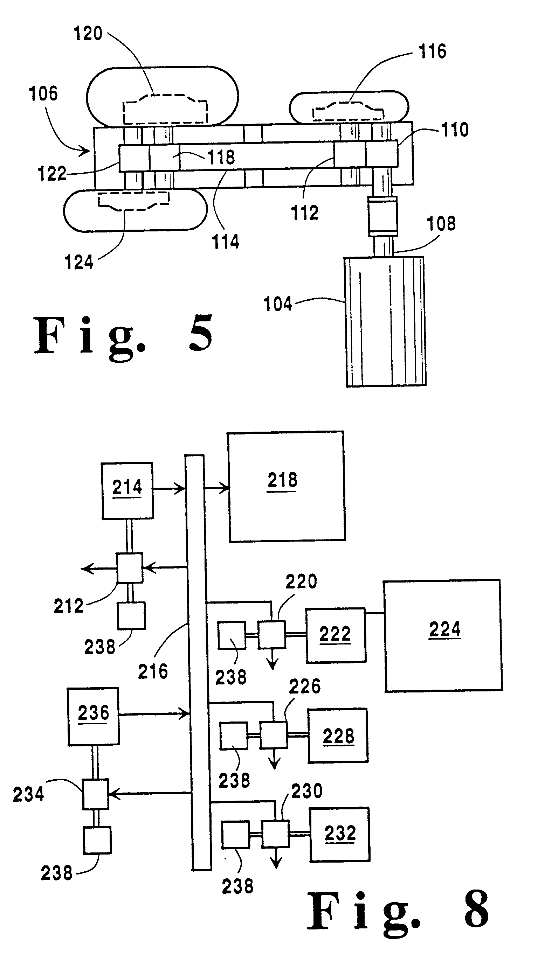

In yet another system embodiment, depicted in Fig. 5, a combustor-turbine unit 104 is integrated with an integral gear compressor 106 by coupling a combustor-turbine output shaft 108 with a first pinion 110 which engages with a second pinion 112 which meshes with the bull gear 114 of the compressor. On the second pinion 112 is mounted a first radial impeller 116 providing a third stage of compression. Also meshing with the bull gear 114 is a third pinion 118 on which is mounted a second radial impeller 120 providing a first stage of compression. Also meshing with the bull gear 114 is a fourth pinion 122 on which is mounted a third radial impeller 124 providing a second stage of compression.

Additional radial impellers could be installed to provide additional stages of compression, if desired. Each pinion may rotate at a different speed, depending on its diameter as selected. In the embodiment of Fig. 5, the pinions have four different diameters and rotate at four different speeds.

Between the stages of compression are intercoolers which are cooled by water, air or other available medium. For startup of the system, a motor (not shown) may be provided coupled to a second shaft (not shown) emerging from the combustor-turbine unit 104.

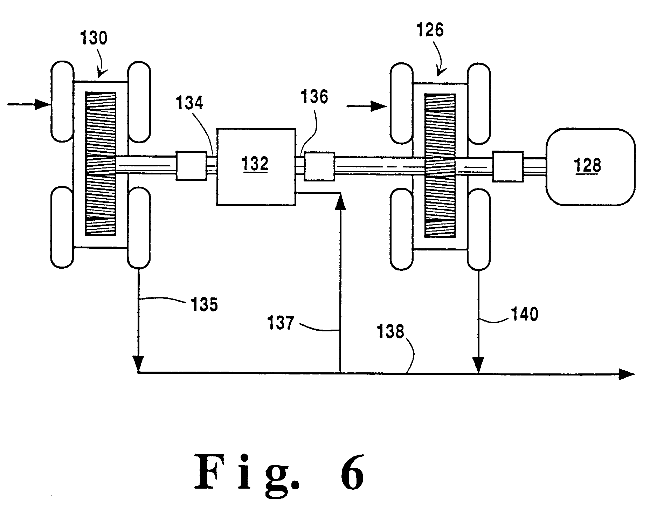

As shown in Fig. 6, an existing process compressor 126 driven by a motor-generator 128 may be readily combined with an added integral gear compressor 130 driven by a combustor-turbine unit 132. In this embodiment, the combustor-turbine unit 132 has a first shaft 134 coupled to the added compressor 130 and a second shaft 136 coupled to the existing compressor 126. The shafts may rotate at different speeds. During operation of the combustor-turbine unit 132, any power in excess of that used to drive the two compressors can be used in the motor-generator 128 to generate electrical power which can be used elsewhere.

As shown in Fig. 6, a stream 135 of compressed air from the new compressor 130 can be divided into a stream 137 of air to the combustor 132 and a stream 138 to the process plant. The latter stream is joined by a stream 140 of compressed air from the existing compressor 126.

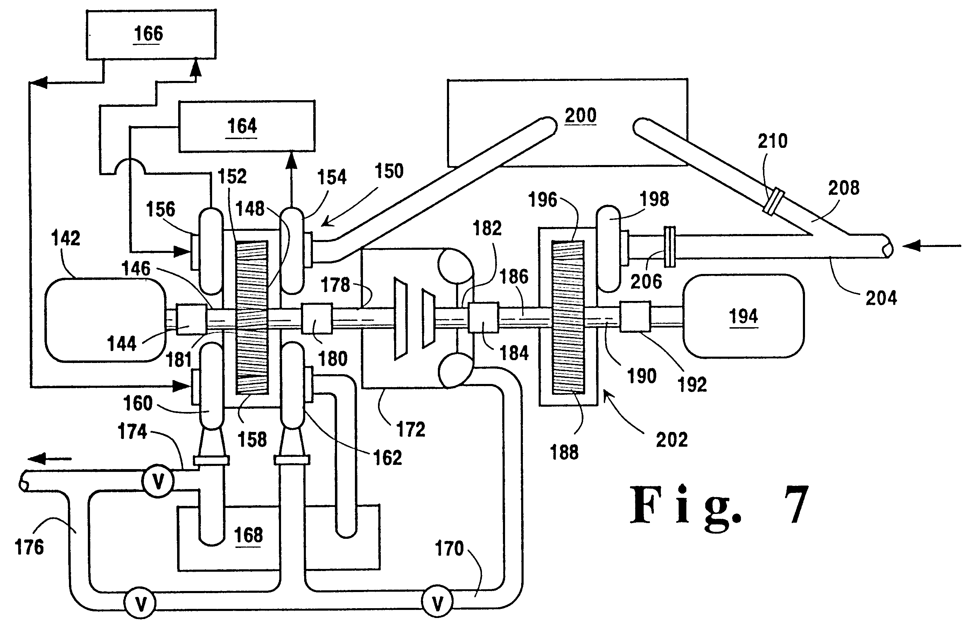

Still another embodiment of the invention, shown in Fig. 7, can be used to avoid the risk of combustor-turbine failure with resulting loss of compressed air supply to a process plant. This embodiment allows drive either by an electric motor or gas turbine. A motor 142 is connected through a first coupling 144 to a shaft 146 which is integral with a first bull gear 148, which is integral with a high pressure compressor 150. Meshing with the first bull gear 148 is a first pinion 152 on which is mounted a second stage compressor stage 154 and a third stage compressor stage 156. Also meshing with the first bull gear 148 is a second pinion 158 on which is mounted a fourth compressor stage 160 and a fifth compressor stage 162. A second intercooler 164 is provided between compression stages two and three, a third intercooler 166 is provided between stages three and four, and a fourth intercooler 168 is provided between stages four and five. A stream 170 of compressed air from compression stage five 162 is ducted to the combustor of the combustor-turbine unit 172 that drives the high pressure compressor 150. A stream 174 of compressed air from compression stage four or a stream 176 of compressed air from compression stage five 162 is ducted to the process plant.

The combustor-turbine unit 172 that drives the high pressure compressor 150 has a first output shaft 178 that is connected by a second coupling 180 to a third pinion 181 that meshes with the bull gear 148. The combustor-turbine 172 has a second output shaft 182 which is connected by a third coupling 184 to a shaft 186 that is integral with a second bull gear 188. Emanating from the center of the other side of the second bull gear 188 is a shaft 190 that is connected by a fourth coupling 192 to a motor-generator 194.

Meshing with the second bull gear 188 is a fourth pinion 196 on which is mounted a first stage compression stage 198 which discharges into a first intercooler 200. The second bull gear 188 and the first compression stage 198 comprise a low pressure compressor 202 which discharges into the first intercooler 200, from which cooled compressed air is ducted to the second compression stage 154 on the high pressure compressor 150. Intake air is provided to the first compression stage compression 198 through an air supply duct 204 which includes a first pair of flanges 206 capable of receiving a blank plate to close off the suction to the first compression stage 198 when desired. Branching from the air supply duct 204 is a duct 208 having a second pair of flanges 210 normally retaining a blank plate. Valves could be used in place of the flanges 206 and 210.

In normal startup of the system for steady-state drive by the combustor-turbine unit, the motor 194 drives the low pressure compressor 202, the high pressure compressor 150 and the combustor-turbine unit 172. For normal steady, combustor-turbine drive operation, the motor 142 is uncoupled and the combustor-turbine unit 172 drives the high pressure compressor 150 and the low pressure compressor 202 and the motor-generator 194. The electric power generated is used elsewhere in the process plant. The first pair of flanges 206 are unblanked and the second pair of flanges 210 are blanked.

When the combustor-turbine unit 172 is nonoperational and motor drive is employed, the motor 142 drives the high pressure compressor 150 which is uncoupled from the rest of the equipment by coupling 180. The first pair of flanges 206 are blanked, and the second pair of flanges 210 are unblanked allowing uncompressed air directly into the first intercooler 200 and on into the high pressure compressor 150. During motor drive of the system, no air is required for the combustor-turbine unit 172, and compressed air is supplied to the process plant from the fifth compressor stage 162 on the high pressure compressor 150. With the low pressure compressor 202 bypassed, the density of the flow at the inlet to high pressure compressor 150 is reduced. However, the stages are matched such that the high pressure compressor 150 meets the compressed air pressure and flow requirements of the process plant.

In Fig. 8 is depicted a system embodiment integrating combustor-turbine units, compressors, and generator-motors to supply compressed air to a process plant and to a supply line leading to off site users. The system also generates electrical power which is available for on-site use. In the system, a first combustor-turbine unit 212 drives a first compressor 214 supplying air into a pipeline 216. The pipeline 216 supplies air to the first combustion-turbine unit 212, to other on-site combustor-turbine units 220, 226, 230, 236, to an on-site process plant 218 and to off-site users. A second combustor-turbine unit 220 drives a recycle compressor 222 in a gas liquifier plant 224. A third combustor-turbine unit 226 drives a nitrogen gas product compressor 228 and a fourth combustor-turbine unit 230 drives an oxygen gas product compressor 232. A fifth combustor-turbine unit 234 drives a supplemental air compressor 236 to supply compressed air to the air supply line 216 as needed. Any or all of the combustor-turbine units may be coupled to starter-generators such as starter-generators 238.

ANALYTICAL EXAMPLE

An analysis was made comparing power costs for supplying compressed air to two air separation plants. The first plant employed a combustor-turbine unit to drive an integral gear compressor supplying compressed air to both the air separation plant and to the combustor-turbine unit pursuant to this invention. The combustor-turbine unit and compressor schematically conformed to the depiction in Fig. 1 and operated according to the processes shown in Fig. 3. The integral gear air compressor had four stages. Compressed air was supplied to the air separation plant after three stages of compression with a compression ratio of 1.905 per stage. Compressed air was supplied to the combustor-turbine unit after an additional stage with a compression ratio of 1.6.

The second plant conventionally employed an electric motor to drive an integral gear air compressor supplying compressed air to the air separation plant. This compressor is also shown in Fig. 1. except as follows. The air compressor had only three stages of compression, each with a compression ratio of 1.9. Compressed air take-off to the air separation plant was at the same pressure as in the first plant, namely at 96.5 psia. The fourth compression stage, the combustor-turbine, and its regenerative heat exchanger were not present.

Both plants were sized to produce nominally 160 tons per day of oxygen product. The air flow required was 796,000 scfh at a suction pressure of 14.6 psia and a suction temperature of 68 °F. The pressure drop in each intercooler was 0.75 psi, and in the combustor, regenerator, and reheater 2.0 psi each. Cooling water was available at 68 °F, and the temperature approach in the intercoolers was 10 F°. The compressor stage efficiency was 85.5%, the turbine stage efficiency 90.0%, and the mechanical loss 3%. The regenerative heat exchanger operated at 90% effectiveness. Electricity was assumed to cost $0.04 per kw-hr, and the natural gas fuel for the combustor-turbine unit, $3.00 per 1000 cu. ft.

With the plants operating 8500 hours per year, the yearly power cost for the first plant was $290,000, and for the second plant $560,000. Thus operation pursuant to the invention produced a cost savings for power of 48.7%.

Although the invention has been described with a degree of particularity, the present disclosure has been made only by way of example, and numerous changes in the details and arrangement of the apparatus and the process may be resorted to without departing from the spirit and scope of the invention as hereinafter claimed.

## Claims

1. A system for compressing air for supply to a process plant, said system comprising:
   (a) a combustor-turbine unit having at least one turbine output shaft;
   (b) a bull gear;
   (c) means for driving said bull gear with said turbine output shaft;
   (d) at least two compression stages, one stage having an inlet for receiving air for compression, one stage having an outlet for supplying compressed air to said combustor-turbine unit and one stage having an outlet for supplying compressed air to the process plant;
   (e) conduit between one of said compression stages and said combustor-turbine unit, said conduit for supplying compressed air for combustion in said combustor-turbine unit;
   (f) at least one pinion carrying at least one of said compression stages, said pinion meshing with said bull gear; and
   (g) at least one intercooler for intercooling compressed air between at least two of said compression stages.

2. The invention as in claim 1 wherein said at least one pinion carries two compressor stages.

3. The invention as in claim 1 wherein said at least one pinion has a shaft which carries two compression stages both located on the same side of the bull gear.

4. The invention as in claim 1 wherein said compression stages are radial stages.

5. The invention as in claim 1 wherein said bull gear driving means comprises coupling said turbine output shaft directly into the center of said bull gear.

6. The invention as in claim 1 wherein said bull gear driving means comprises a driving pinion coupled to said turbine output shaft and meshing with said bull gear.

7. The invention as in claim 1 wherein said bull gear driving means comprises a driving pinion coupled to said turbine output shaft and meshing with another pinion meshing with said bull gear.

8. The invention as in claim 1 further comprising a heat exchanger connected to preheat combustor intake air against turbine exhaust gas.

9. The invention as in claim 1 wherein said combustor-turbine unit has a first and a second expansion stage and said invention further comprises a reheater connected to the discharge of said first expansion stage, to the intake of said second expansion stage, and having an inlet for a supply of fuel for combustion in said reheater.

10. The invention as in claim 1 further comprising a motor-generator connected to said turbine output shaft.

11. The invention as in claim 1 further comprising a motor-generator disconnectably connected through gearing to said bull gear.

12. The invention as in claim 1 wherein said system has four compression stages, the third stage having said outlet for supplying compressed air to the process plant and the forth stage having said outlet for supplying compressed air to said combustor-turbine unit.

13. The invention as in claim 1 further comprising:
   (h) a motor-generator disconnectably coupled to said bull gear;
   (i) a disconnectable coupling in said means for driving said bull gear with said combustor-turbine unit;
   (j) a second bull gear disconnectably coupled to said turbine output shaft;
   (k) a low-pressure compressor having an intake and a discharge;
   (l) a second driven pinion carrying said low-pressure compressor, said second driven pinion meshing with said second bull gear; and
   (m) conduit connecting said low-pressure compressor with said inlet on said stage for receiving air for compression.

14. The invention as in claim 13 further comprising a motor-generator disconnectably coupled to said second bull gear.

15. A system for compressing air for supply to a process plant, said system comprising:

(a) a combustor-turbine unit having at least one turbine output shaft;

(b) an integral gear compressor comprising:

(1) a bull gear;

(2) at least two compression stages, at least one of said stages having an outlet for supplying compressed air to the process plant, and at least one of said stages having an outlet for supplying compressed air to said combustor-turbine unit;

(3) at least one intercooler for intercooling compressed air between at least two of said compression stages;

(4) at least one pinion carrying at least one of said compression stages, said pinion meshing with said bull gear;

(c) means for driving said bull gear with said turbine output shaft; and

(d) conduit for ducting compressed air from said integral gear compressor to said combustor-turbine unit.

16. The invention as in claim 15 further comprising a second integral gear compressor connected to said combustor-tubine unit.

17. The invention as in claim 15 further comprising:

(a) an air pipe line connected to receive compressed air from said integral gear compressor and deliver compressed air to said combustion-turbine unit, said pipeline having outlets for supplying compressed air to the process plant and other equipment consuming compressed air; and

(b) at least one combustor turbine unit connected to receive compressed air from said air pipeline.

18. A method for compressing air for supply to a process plant and to a combustor-turbine unit, said method comprising:

(a) providing a combustor-turbine unit;

(b) driving a bull gear with said combustor-turbine unit;

(c) driving a multistage compressor with said bull gear;

(d) compressing air in said multistage compressor;

(e) intercooling between at least two stages of said compressor;

(f) ducting compressed air from said compressor to said combustor-turbine unit and to the process plant.

19. The invention as in claim 18 wherein said step of driving a bull gear comprises coupling the output of said combustor-turbine unit to a pinion meshing with said bull gear.

20. The invention as in claim 18 wherein said step of driving a bull gear comprises coupling the output of said combustor-turbine unit to a pinion engaging another pinion meshing with said bull gear.

21. The invention as in claim 18 wherein the step of driving said multistage compressor comprises meshing at least one pinion with said bull gear and mounting at least one of the stages of said compressor on said pinion.

22. The invention as in claim 18 further comprising preheating the compressed air from said compressor enroute to said combustor-turbine unit against the discharge gas from said combustor-turbine unit.

23. The invention as in claim 18 wherein said combustor-turbine unit performs two stages of expansion and said invention further comprises reheating the gas between expansion stages.

**Fig. 1**

EP 0 512 568 A1

Fig. 2

Fig. 3

**Fig. 4**

**Fig. 5**

**Fig. 8**

# Fig. 6

Fig. 7

EP 0 512 568 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 484 133 (SULZER FRERES)<br><br>* the whole document *<br>--- | 1,5,<br>15-18,21 | F02C6/08<br>F02C7/143 |
| X | NL-C-84 400 (GEBRUDER SULZER)<br><br><br>* figures 1,2 *<br>--- | 1,5,11,<br>15-18,<br>21,22 | |
| X | FR-A-2 289 741 (BBC AKTIENGESELLSCHAFT BROWN, BOVERY & CIE)<br>* page 4, line 17 - page 5, line 12; figure *<br>--- | 1,10,11,<br>15,18 | |
| X | US-A-4 473 754 (JOY)<br><br>* the whole document *<br>--- | 1,6,11,<br>15,16 | |
| X | EP-A-0 076 529 (BBC AKTIENGESELLSCHAFT BROWN, BOVERY & CIE)<br>* page 2, line 25 - page 3, line 34; figure 1 *<br><br>----- | 1 | |

TECHNICAL FIELDS
SEARCHED (Int. Cl.5)

F02C

The present search report has been drawn up for all claims

| Place of search | Date of completion of the search | Examiner |
|---|---|---|
| THE HAGUE | 10 AUGUST 1992 | SERRANO GALARRAGA J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)